# EUROPEAN PATENT SPECIFICATION

(11) **EP 0 790 296 B1**
(45) Date of publication and mention of the grant of the patent: **06.09.2000**
(21) Application number: 97201141.5
(22) Date of filing: 29.11.1993
(51) Int. Cl.: C11D 3/34, C11D 7/34, C11D 3/39, C02F 5/08

(54) **Limescale removal compositions**
Zusammensetzungen zum Entfernen von Kesselstein
Des compositions pour enlever le tartre

(43) Date of publication of application: 20.08.1997
(62) Divisional of application: 93870228.9
(73) Proprietor: THE PROCTER & GAMBLE COMPANY, Cincinnati, Ohio 45202 (US)
(72) Inventor: Bianchetti, Giulia Ottavia, 00144 Rome (IT); Scialla, Stefano (NMN), 00128 Rome (IT); Cardola, Sergio (NMN), 00064 Rome (IT)
(74) Representative: Engisch, Gautier

(56) References cited:
- EP-A- 0 265 979
- EP-A- 0 271 791

## Description

### TECHNICAL FIELD

The present invention relates to compositions for the removal of limescale. The compositions herein can be used on a variety of surfaces, ranging from bathrooms, toilets, and kitchen surfaces to various appliances. The compositions herein can further be used to remove limescale from dentures.

### BACKGROUND

Tap water always contains a certain amount of solubilized ions which eventually deposit as salts, on surfaces in contact with said water, as it evaporates. Such salts include calcium carbonate, commonly referred to as limescale. This phenomenon of limescale accumulation on surfaces which are often in contact with water may damage surfaces and affect the functioning of taps or appliances. Also, in the accumation of limescale in toilet bowls is aesthetically unpleasant and favors the deposiiton of further soil and the growth of microorganisms. It is therefore important to control this limescale accumulation phenomenon.

A variety of compositions have been proposed for this purposed, which typically comprise various acids, such as hydrochloric acid. However, compositions of the art formulated with said acids require a significant amount of acid to ensure effective removal of limescale, and are thus potentially harmful to the user in case of contact with the skin, or accidental ingestion. It is thus an object of the present invention to provide limescale removing compositions which are particularly efficient in removing limescale, yet which have a lower reserve of acidity than the compositoins of the art, thus which are less harmful.

In response to these objects, we have now found that the combination of a C₁-C₆ linear or branched alkylsulfonic acid, or mixtures thereof, with sulfamic acid results in a synergistic effect in removing limescale.

EP 271 791 discloses aqueous acidic cleaning compositions comprising a C₁-C₄ alkane sulfonic acid, and a second acid being sulfuric acid and/or phosphoric acid. Said compositions are suitable for the removal of soil such as carbohydrates, protein, fats and other remains in the food processing industry.

EP 265 979 relates to a thickened aqueous cleaning composition comprising surfactant, an organic sulphonate and water acid containing (e.g. sulfonic acid) compositions are preferred.

### SUMMARY OF THE INVENTION

The present invention thus encompasses a composition suitable for removing limescale which comprises a C₁-C₆ linear or branched alkylsulfonic acid, or mixtures thereof and sulfamic acid wherein the ratio of sulfamic acid to alkyl sulfonic acid is from 1:6 to 1:3.

### DETAILED DESCRIPTION OF THE INVENTION

The compositions of the present invention are aqueous liquid compositions comprising as a first essential ingredient a C₁-C₆ linear or branched alkylsulfonic acid, or mixtures thereof. Preferred C₁-C₆ linear or branched alkylsulfonic acid for use herein include methanesulfonic acid, ethanesulfonic acid, propanesulfonic acid and mixtures thereof. Particularly preferred for its limescale removal performance is the use herein of methanesulfonic acid which is commercially available for example from Aldrich, William Blythe & Co. Ltd. or Elf Atochem. The compositions herein comprise from 1% to 50% by weight of the total composition of said acid or mixtures thereof, preferably from 1% to 30%, most preferably 1% to 20%. The compositions according to the present invention are less harsh than the compositions of the art in that, at parity limescale removal performance, the reserve of acidity is much less than the compositions in the art. Thus in this respect, in case of contact with the users skin or in case of ingestion, the composition of the present invention will be less harmful.

The compositions of the present invention comprise as a second essential ingredient a small amount of sulfamic acid. Typically, the compositions herein comprise from 0.1% to 25% by weight of the total composition of sulfamic acid, preferably from 0.1% to 20%, most preferably from 0.2% to 15%.

Indeed, we have found that the combination of the alkylsulfonic acids herein together with sulfamic acid act in synergy in removing limescale. This property is particularly interesting as it allows the formulation of compositions which are particularly effective in removing limescale, while they comprise only minor amounts of sulfamic acid, thereby reducing harshness.

The synergistic effect observed depends to some extent on the ratio of sulfamic acid to alkylsulfonic acid. The ratio of sulfamic acid to alkylsulfonic acid should be of from 1:6 to 1:3.

The pH of the compositions according to the present invention may range from 0 to 4, preferably 0 to 2, and is essentially determined by the type and amount of acid used

It is preferred to formulate the compositions without monopersulfuric acid and similar oxidants, since monopersulfuric acid oxidizes sulfamic acid, thereby resulting in loss of available oxygen.

The compositions herein may further comprise surfactants since they are often used on items or surfaces which have soils or stains which do not comprise limescale, and which require the presence of surfactants in the compositions of the present invention, in order to be removed from said surfaces. Thus, the compositions according to the present invention can comprise any surfactant, cationic, anionic, nonionic and zwitterionic, in amounts ranging up to 50% by weight of the total composition, preferably from 1% to 30%. Suitable anionic surfactants include alkyl or alkylene sulfates or sulfonates, alkyl or alkylene ether sulfates or sulfonates, linear alkyl benzene sulfonate and the like. Suitable cationic surfactants include quaternary ammonium salts. Suitable nonionic surfactants for use herein include ethoxylated carboxylic acids, amine oxides and fatty alcohol ethoxylates. For example, when the compositions herein are formulated so as to be used on inclined surfaces, it may be desirable to formulate them as emulsions of nonionic surfactants, such as in EP-A-598 692. Indeed, appropriate selection of the nonionic surfactants allows to obtain compositions with pseudoplastic profile which leads to excellent spreading and clinging characteristics.

The present invention can further comprise a multitude of optionals such as solvents, colorants, dyes, perfumes, stabilizers, radical scavengers and the like.

The present invention will be further illustrated by the following examples:

### EXAMPLES

The following compositions are made which comprise the following ingredients in the following proportions (total weight %)

### Example 1

| | |
|---|---|
| Dobanol ® 91-10 | 1.8 |
| Dobanol ® 91-2.5 | 4.2 |
| Methanesulfonic acid | 7.5 |
| Sulfamic acid | 2.5 |
| water and minors (e.g. perfume, dye) up to 100% pH = 0.3 | |

### Example 2 (Comparative)

| | |
|---|---|
| Dobanol ® 91-10 | 1.8 |
| Dobanol ® 91-2.5 | 4.2 |
| Methanesulfonic acid | 9 |
| Sulfamic acid | 1 |
| water and minors (e.g. perfume, dye) up to 100% pH = 0.2 | |

### Example 3 (Comparative)

| | |
|---|---|
| Dobanol ® 91-10 | 1.8 |
| Dobanol ® 91-2.5 | 4.2 |
| Methansulfonic acid | 5 |
| Sulfamic acid | 5 |
| water and minors (e.g. perfume, dye) up to 100% pH = 0.4 | |

### Example 4 (Comparative)

| | |
|---|---|
| Dobanol ® 91-10 | 1.8 |
| Dobanol ® 91-2.5 | 4.2 |
| Methanesulfonic acid | 10 |
| water and minors (e.g. dye, perfume) up to 100% pH = 0.3 | |

The limescale removal efficiency of samples is evaluated by putting a block of 6 g of calcium carbonate in 50 mls of the sample to be evaluated for a period of 30 minutes. The block is weighed dry before and after the experiment.

Composition 1 illustrates that mixtures of alkylsulfonic acids with sulfamic acids are particularly effective in removing limescale. We have measured a weight decrease of 1.06 g with composition 1, while the same composition but with 10 % methanesulfonic acid (composition 4) only, instead, gave 0.87 g decrease, and the same composition but with 10% sulfamic acid only, instead, gave 0.85 g decrease. Thus, when combining the alkylsulfonic acids of the present invention with sulfamic acid, a better performance is obtained with a same total amount of acid than with either of these acids alone. The synergistic effect of mixtures of sulfamic ascid with alkylsulfonic acid, in this case methanesulfonic acid, is maximized at certain ratios. Composition 2 and 3, outside the preferred ratio range, give a weight decrease of respectively 0.90 g and 0.93 g. This performance is better than the performance obtained with either acids alone but poorer than the performance obtained with composition 1 comprising a mixture of both acids within the preferred ratio range.

## Claims

1. An aqueous composition suitable for removing limescale comprising a C₁-C₆ linear or branched alkylsulfonic acid, or mixtures thereof, and sulfamic acid wherein the ratio of sulfamic acid to alkylsulfonic acid is from 1:6 to 1:3.

2. An aqueous composition according to claim 1 wherein said sulfamic acid is present in amounts of from 0.1% to 25% by weight of the composition, preferably from 0.1% to 20% and most preferably from 0.2% to 15%.

3. A composition according to any of the preceding claims wherein said alkylsulfonic acid or mixtures thereof is present at a level of from 1% to 50% by weight of the total composition , preferably from 1% to 30% and most preferably from 1 % to 20%.

4. A composition according to any of the preceding claims wherein said C₁-C₆ linear or branched alkylsulfonic acid is methanesulfonic acid.

5. A composition according to any of the preceding claims wherein said composition further comprises up to 50% by weight of the total composition of a surfactant system or mixtures thereof, preferably from 1 % to 30%.

6. A composition according to any of the preceding claims wherein said composition further comprises an optional ingredient typically selected from the group consisting of solvents, colorants, dyes, perfumes, stabilizers or mixtures thereof.

7. The use of a composition according to any of the preceding claims for removing limescale.

## Patentansprüche

1. Wäßrige Zusammensetzung geeignet zur Entfernung von Kalkbelag eine lineare oder verzweigte C₁-C₆-Alkylsulfonsäure oder Mischungen davon und Sulfaminsäure umfassend, worin das Verhältnis von Sulfaminsäure zu Alkylsulfonsäure von 1:6 bis 1:3 reicht.

2. Wäßrige Zusammensetzung nach Anspruch 1, worin die Sulfaminsäure in Mengen von 0,1 Gew.-% bis 25 Gew.-% der Zusammensetzung, bevorzugt von 0,1 Gew.-% bis 20 Gew.-% und ganz besonders bevorzugt von 0,2 Gew.-% bis 15 Gew. -% vorliegt.

3. Zusammensetzung nach mindestens einem der vorangehenden Ansprüche, worin die Alkylsulfonsäure oder Mischungen davon in einem Anteil von 1 Gew.-% bis 50 Gew.-% der Gesamtzusammensetzung, bevorzugt von 1 Gew.-% bis 30 Gew.-% und ganz besonders bevorzugt von 1 Gew.-% bis 20 Gew.-% vorliegt.

4. Zusammensetzung nach mindestens einem der vorangehenden Ansprüche, worin die lineare oder verzweigte C1-C6-Alkylsulfonsäure Methansulfonsäure ist.

5. Zusammensetzung nach mindestens einem der vorangehenden Ansprüche, worin die Zusammensetzung weiterhin bis zu 50 Gew.-% der Gesamtzusammensetzung eines Tensidsystems oder Mischungen davon, bevorzugt von 1 bis 30 Gew.-%, umfaßt.

6. Zusammensetzung nach mindestens einem der vorangehenden Ansprüche, worin die Zusammensetzung weiterhin einen Wahlbestandteil, typischerweise ausgewählt aus der Gruppe, bestehend aus Lösungsmitteln, Färbemitteln, Farbstoffen, Duftstoffen, Stabilisatoren oder Mischungen davon, umfaßt.

7. Verwendung einer Zusammensetzung nach mindestens einem der vorangehenden Ansprüche zur Entfernung von Kalkbelag.

## Revendications

1. Composition aqueuse appropriée pour éliminer le tartre, comprenant un acide alkyl(en C₁-C₆ linéaire ou ramifié)sulfonique, ou des mélanges de ceux-ci, et de l'acide sulfamique, dans laquelle le rapport de l'acide sulfamique à l'acide alkylsulfonique est de 1:6 à 1:3.

2. Composition aqueuse selon la revendication 1, dans laquelle ledit acide sulfamique est présent en quantités de 0,1 % à 25 % en poids de la composition, de préférence de 0,1 % à 20 % et tout particulièrement de 0,2 % à 15 %.

3. Composition selon l'une quelconque dcs revendications précédentes, dans laquelle ledit acide alkylsulfonique, ou lesdits mélanges d'acides alkylsulfoniques, est présent à raison de 1 % à 50 % en poids de la composition totale, de préférence de 1 % à 30 % et tout particulièrement de 1 % à 20%.

4. Composition selon l'une quelconque des revendications précédentes, dans laquelle ledit acide alkyl(en C₁-C₆ linéaire ou ramifié)sulfonique est l'acide méthanesulfonique.

5. Composition selon l'une quelconque des revendications précédentes, dans laquelle ladite composition comprend par ailleurs jusqu'à 50 % en poids de la composition totale d'un système tensioactif ou de mélanges de systèmes tensioactifs, de préférence de 1 % à 30 %.

6. Composition selon l'une quelconque des revendications précédentes, dans laquelle ladite composition comprend par ailleurs un ingrédient facultatif choisi typiquement dans le groupe constitué par les solvants, les colorants, les teintures, les parfums, les stabilisants, ou des mélanges de ceux-ci.

7. Utilisation d'une composition selon l'une quelconque des revendications précédentes pour éliminer le tartre.
